# EUROPEAN PATENT APPLICATION

(11) **EP 3 783 384 A1**
(43) Date of publication of application: **24.02.2021**
(21) Application number: 19787691.5
(22) Date of filing: 25.01.2019
(51) Int. Cl.: G01S 7/40, G01S 7/02, G01S 13/93

(54) **ELECTRONIC DEVICE, METHOD FOR CONTROLLING ELECTRONIC DEVICE, AND PROGRAM FOR CONTROLLING ELECTRONIC DEVICE**

(30) Priority: 19.04.2018 JP 2018080868
(71) Applicant: Kyocera Corporation, Kyoto-shi, Kyoto 612-8501 (JP)
(72) Inventor: SAHARA, Tooru, Kyoto-shi, Kyoto 612-8501 (JP); NISHIKIDO, Masamitsu, Kyoto-shi, Kyoto 612-8501 (JP); OOTSUKI, Yutaka, Kyoto-shi, Kyoto 612-8501 (JP)
(74) Representative: Viering, Jentschura & Partner mbB Patent- und Rechtsanwälte
(86) International application number: PCT/JP2019/002534
(87) International publication number: WO 2019/202803

(57) **Abstract**

An electronic apparatus includes a controller configured to control switching between a first mode in which radiation of transmission waves is directed in a first direction and a second mode in which radiation of transmission waves is directed in a second direction downward from the first direction. When a predetermined status is detected in the first mode, the controller performs control to switch to the second mode.

## Description

### CROSS REFERENCE TO RELATED APPLICATION

This application claims priority to Japanese Patent Application No. 2018-80868 filed on April 19, 2018, the entire contents of which are incorporated herein by reference.

### TECHNICAL FIELD

The present disclosure relates to an electronic apparatus, a control method for the electronic apparatus, and a control program for the electronic apparatus.

### BACKGROUND

In industries related to automobiles, such as the automobile industry, technologies for measuring a distance between a vehicle and an object are emphasized. In recent years, along with the development of technologies that assist driving by drivers and technologies that partially or entirely automate driving, the importance of such technologies for measuring distance is expected to increase. As an example of such technologies for measuring distance, PTL 1 discloses a driving assist system that measures a distance between a vehicle and a nearby vehicle using a millimeter wave radar. In a manner similar to the measuring of distance, for example, technologies for measuring direction (azimuth) from a vehicle to an object such as another vehicle is also emphasized. For example, PTL 2 discloses a method for setting an orientation of an antenna during installation thereof.

### CITATION LIST

### Patent Literature

PTL 1: JP-2009-59200 A
PTL 2: JP-11-133144 A

### SUMMARY

An electronic apparatus according to an embodiment includes a transmitter, a receiver, and a controller.

The transmitter transmits transmission waves.

The receiving unit receives reflected waves from among the transmission waves reflected by an object.

The controller performs control to switch between a first mode in which radiation of the transmission waves is directed in a first direction and a second mode in which radiation of the transmission waves is directed in a second direction downward from the first direction.

The controller performs control to switch to the second mode when a predetermined status is detected in the first mode.

A control method for an electronic apparatus according to an embodiment includes a transmission step, a reception step, and a control step.

The transmitting step transmits transmission waves.

The receiving step receives reflected waves from among the transmission waves reflected by an object.

The control step performs control to switch between a first mode in which radiation of the transmission waves is directed in a first direction and a second mode in which radiation of the transmission waves is directed in a second direction downward from the first direction.

In the control step the electronic apparatus performs control to switch to the second mode when a predetermined status is detected in the first mode.

A control program for an electronic apparatus according to an embodiment causes a computer to execute a transmission step, a reception step, and a control step.

The transmitting step transmits transmission waves.

The receiving step receives reflected waves from among the transmission waves reflected by an object.

The control step performs control to switch between a first mode in which radiation of the transmission waves is directed in a first direction and a second mode in which radiation of the transmission waves is directed in a second direction downward from the first direction.

In the control step the electronic apparatus performs control to switch to the second mode when a predetermined status is detected in the first mode.

### BRIEF DESCRIPTION OF THE DRAWINGS

FIG. 1 is a diagram illustrating a mode of use of an electronic apparatus according to an embodiment;
FIG. 2 is a diagram illustrating sensors and transmission waves according to an embodiment;
FIG. 3 is a functional block diagram schematically illustrating a configuration of an electronic apparatus according to an embodiment;
FIG. 4 is a functional block diagram schematically illustrating a configuration of a sensor according to an embodiment;
FIG. 5 is a diagram illustrating a virtual array antenna configured according to a sensors according to an embodiment;
FIG. 6A is a diagram explaining operation of an electronic apparatus according to an embodiment;
FIG. 6B is a diagram explaining operation of an electronic apparatus according to an embodiment;
FIG. 7 is a functional block diagram schematically illustrating a configuration of a sensor according to an embodiment; and
FIG. 8 is a flowchart illustrating operation of an electronic apparatus according to an embodiment.

### DETAILED DESCRIPTION

In azimuth measuring technologies such as those described above, it would be advantageous if safety could be improved when a mobile body such as an automobile is measuring azimuth. The present disclosure relates to providing an electronic apparatus that improves safety when measuring azimuth, a control method for the electronic apparatus, and a control program for the electronic apparatus. According to an embodiment, an electronic apparatus that improves safety when measuring azimuth, a control method for the electronic apparatus, and a control program for the electronic apparatus can be provided. Hereinafter, the embodiment will be described in detail with reference to the drawings.

An electronic apparatus according to the embodiment includes a sensor that is mounted on a vehicle, e.g., an automobile, and measures azimuth from the sensor to an object located in the vicinity of the sensor. The sensor transmits transmission waves, e.g., radio waves, as detection waves. Also, the sensor receives reflected waves from among the transmission waves reflected by the object. The electronic apparatus according to the embodiment measures azimuth from the sensor to the object, based on the transmission waves transmitted by the sensor and reception waves received by the sensor.

Hereinafter, a typical example of a configuration in which the electronic apparatus according to the embodiment is installed in an automobile such as a passenger car will be described. However, the electronic apparatus according to the embodiment is not limited to being installed in an automobile and the like. The electronic apparatus according to the embodiment can be installed in various other mobile bodies including buses, trucks, motorcycles, bicycles, ships, aircraft, and pedestrians. Further, the electronic apparatus according to the embodiment is not necessarily limited to being installed in a mobile body that moves by itself. The electronic apparatus according to the embodiment can measure azimuth from a sensor to an object in a situation in which at least one of the sensor and the object can move. Further, the electronic apparatus according to the embodiment can naturally measure azimuth of the sensor with to the object even when both the sensor and the object are stationary.

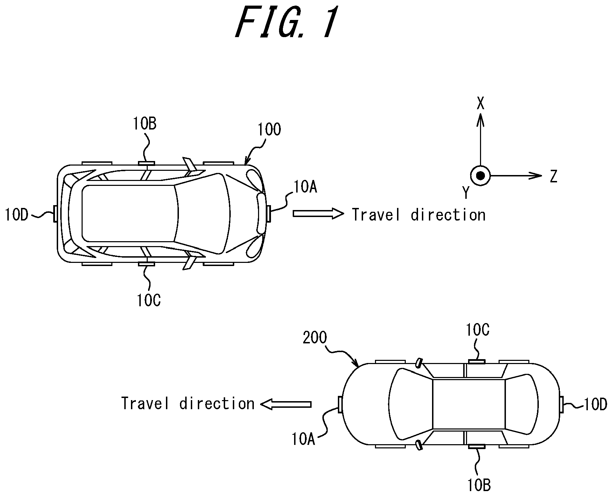

FIG. 1 is a diagram illustrating a mode of use of the electronic apparatus according to the embodiment. FIG. 1 illustrates an example in which the sensor according to the embodiment is mounted on a vehicle such as an automobile.

Each of a vehicle 100 and a vehicle 200 illustrated in FIG. 1 is provided with the sensor according to the embodiment. Each of the vehicle 100 and the vehicle 200 illustrated in FIG. 1 may be an automobile such as a passenger car, or any type of a vehicle. In FIG. 1, the vehicle 100 and the vehicle 200 may move in travel directions indicated by the arrows or may be stationery.

As illustrated in FIG. 1, each of the vehicle 100 and the vehicle 200 is provided with a sensor 10A, a sensor 10B, a sensor 10C, and a sensor 10D. The sensor 10A is mounted on the front side of each of the vehicle 100 and the vehicle 200. The sensor 10B is mounted on the left side of each of the vehicle 100 and the vehicle 200. The sensor 10C is mounted on the right side of each of the vehicle 100 and the vehicle 200. The sensor 10D is mounted on the rear side of each of the vehicle 100 and the vehicle 200. Hereinafter, when the sensor 10A, the sensor 10B, the sensor 10C, and the sensor 10D are not distinguished from each other, they will be simply referred to as "sensors 10". Note that the positions where the sensors 10 are mounted on the vehicles are not limited to the positions illustrated in FIG. 1 and may be appropriately determined.

Because each of the vehicle 100 and the vehicle 200 includes the sensor 10A, the sensor 10B, the sensor 10C, and the sensor 10D installed thereon, the vehicle 100 and the vehicle 200 can detect objects located within a predetermined distance through 360 degrees. As illustrated in FIG. 1, for example, the vehicle 100 can detect the vehicle 200 as an object using any one of the sensors 10. In particular, the sensors 10 mounted on the vehicle 100 detect the vehicle 200 as an object that is located in the vicinity of the vehicle 100. Also, the sensors 10 mounted on the vehicle 100 measures a distance between the vehicle 100 and the vehicle 200 serving as the object. Further, the sensors 10 mounted on the vehicle 100 measures azimuth from the vehicle 100 to the vehicle 200 serving as the object. The vehicle 100 can further detect a pedestrian, an obstacle, or the like located in the vicinity of the vehicle 100 as an object, using any one of the sensors 10.

Similarly, the vehicle 200 can detect the vehicle 100 as an object, using any one of the sensors 10, as illustrated in FIG. 1. The vehicle 200 can also detect a pedestrian, an obstacle, or the like located in the vicinity of the vehicle 200 as an object, using any one of the sensors 10.

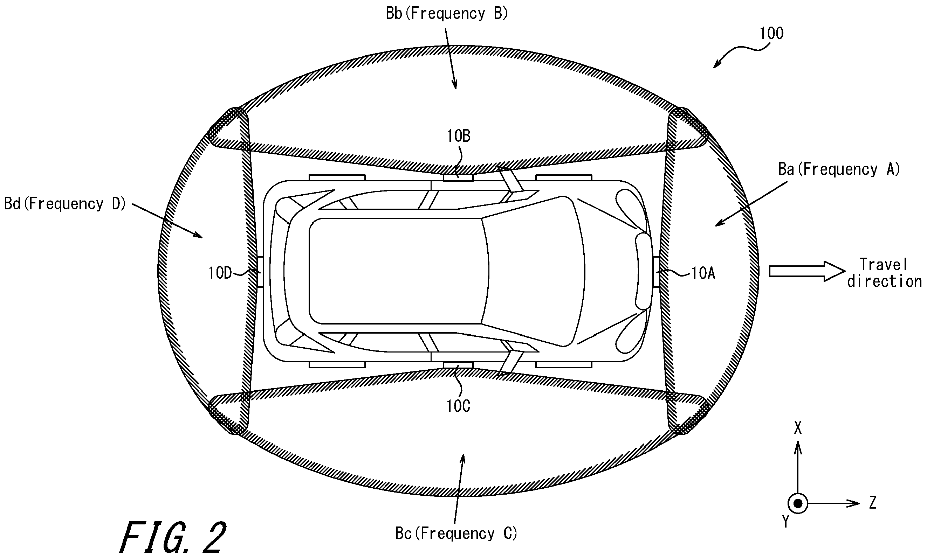

FIG. 2 is a diagram illustrating the sensors according to the embodiment and transmission waves transmitted by the sensors.

FIG. 2 schematically illustrates a state in which the sensor 10A, the sensor 10B, the sensor 10C, and the sensor 10D mounted on the vehicle 100 form respective beams of transmission waves. The sensors 10 may typically be radar (Radio Detecting and Ranging) sensors configured to transmit and receive radio waves. However, the sensors 10 are not limited to being radar sensors. The sensors 10 according to the embodiment may be, for example, sensors based on LIDAR (Light Detection and Ranging, Laser Imaging Detection and Ranging) technology using light waves. Alternatively, the sensors 10 according to the embodiment may be sensors based on, for example, SONAR (Sound Navigation and Ranging) technology using sound waves. The sensors 10 may include, for example, a patch antenna. A configuration of the sensors 10 will be described later.

As illustrated in FIG. 2, the sensor 10A mounted on the front side of the vehicle 100 forms a beam Ba of transmission waves in front of the vehicle 100. The frequency of the transmission waves in the beam Ba is, for example, A. The sensor 10B mounted on the left side of the vehicle 100 forms a beam Bb of transmission waves on the left side of the vehicle 100. The frequency of the transmission waves in the beam Bb is, for example, B. The sensor 10C mounted on the right side of the vehicle 100 forms a beam Bc of transmission waves on the right side of the vehicle 100. The frequency of the transmission waves in the beam Bc is, for example, C. The sensor 10D mounted on the rear side of the vehicle 100 forms a beam Bd of transmission waves behind the vehicle 100. The frequency of the transmission waves in the beam Bd is, for example, D.

As illustrated in FIG. 2, each of the sensors 10 may transmit transmission waves to form a beam having an emission angle of approximately 180 degrees. By using four sensors 10, the entire periphery of the vehicle 100 is surrounded by the beams of the transmission waves of the sensors 10, as illustrated in FIG. 2. However, the installation locations of the sensors 10 and the radiation angles thereof are not limited to those illustrated in FIG. 2. For example, the sensors 10 having respective emission angles smaller than 180 degrees may be mounted on the vehicle 100. In this case, more than four sensors 10 may be mounted on the vehicle 100 such that the entire periphery of the vehicle 100 is surrounded by the beams of the transmission waves of the sensors 10. In a case in which the entire periphery of the vehicle 100 does not need to be surrounded by the beams of the transmission waves of the sensors 10, the emission angles of the beams from the sensors 10 may be reduced, or the number of installed sensors 10 may be reduced, as appropriate.

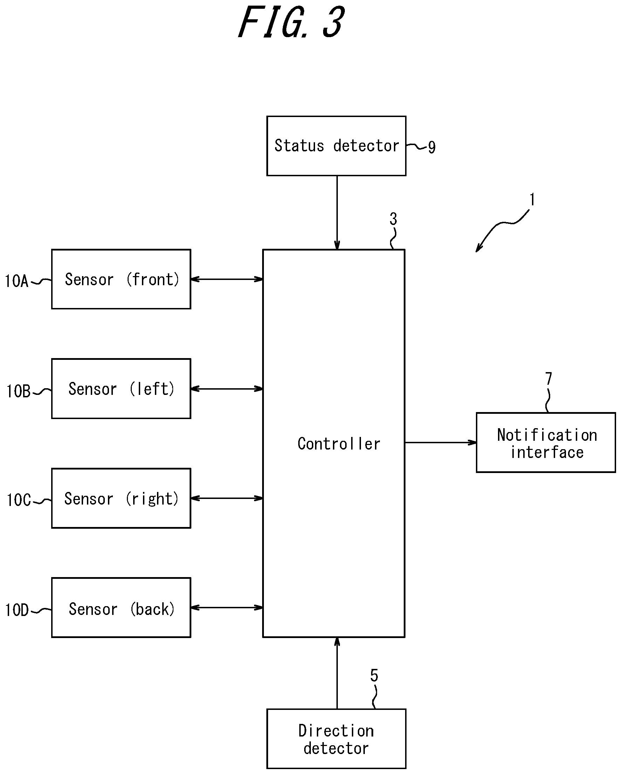

FIG. 3 is a functional block diagram schematically illustrating a configuration of the electronic apparatus according to the embodiment. Hereinafter, the configuration of the electronic apparatus according to the embodiment will be described.

As illustrated in FIG. 3, the electronic apparatus 1 according to the embodiment includes at least a controller 3. Each of the sensor 10A, the sensor 10B, the sensor 10C, and the sensor 10D described above is connected to the controller 3. Further, an direction detector 5, a notification interface 7, and a status detector 9 are connected to the controller 3.

The controller 3 may include at least one processor such as a CPU (Central Processing Unit) to provide control and processing capability for executing various functions. The controller 3 may be collectively implemented by one processor or implemented by several processors or individual processors. The processor may be implemented as a single integrated circuit. The integrated circuit is also called an IC (Integrated Circuit). The processor may be implemented as a plurality of communicatively connected integrated circuits and discrete circuits. The processor may be implemented based on various other known technologies. In one embodiment, the controller 3 may be configured as, for example, a CPU and a program to be executed by the CPU. The controller 3 may include a storage such as a memory necessary for an operation by the controller 3, as appropriate. The memory may store a program to be executed by the controller 3, a result of processing executed by the controller 3, and the like. Further, the memory may function as a working memory of the controller 3. The operation by the controller 3 according to the embodiment will be further described later.

The direction detector 5 detects, for example, azimuth of a vehicle in which the electronic apparatus 1 is installed. The direction detector 5 may be an electronic compass that detects geomagnetism. The direction detector 5 may acquire location information for the electronic apparatus 1, based on a GNSS (Global Navigation Satellite System) technology or the like. The GNSS technology may include any satellite positioning system such as GPS (Global Positioning System), GLONASS, Galileo, or Quasi-Zenith Satellite (QZSS). For example, the direction detector 5 may include a location information acquisition device such as a GPS module. In this case, the direction detector 5 may acquire the location information for the electronic apparatus 1 and detect the azimuth of the vehicle in which the electronic apparatus 1 is installed, based on a chronological change in the location information. The direction detector 5 may include a sensor such as a gyroscope instead of, or in addition to, the position information acquisition device such as the GPS module. In a case in which, for example, a car navigation system is also installed in the vehicle in which the electronic apparatus 1 is installed, the azimuth of the vehicle may be detected using the car navigation system.

In one embodiment, the direction detector 5 may detect, for example, a direction: north, south, east, or west, in which the vehicle 100 having the electronic apparatus 1 installed therein is oriented. This enables the controller 3 to acquire (information on) the azimuth detected by the direction detector 5. The controller 3 can measure the azimuth with respect to a predetermined angle, based on (the information on) the azimuth detected by the direction detector 5.

The notification interface 7 notifies the user of the electronic apparatus 1 of a result of measuring a distance and/or an azimuth performed by the electronic apparatus 1. Various configurations of the notification interface 7 may be conceived, depending on the information to be notified to the user. For example, in a case in which the electronic apparatus 1 notifies the result of measuring the distance and/or the azimuth in a visual manner using characters and/or an image, the notification interface 7 may be a liquid crystal display (LCD), an organic EL display, or an inorganic EL display. For example, in a case in which the electronic apparatus 1 notifies the result of measuring the distance and/or the azimuth using simple visual information, the notification interface 7 may be a light emitting device such as a light emitting diode (LED). For example, in a case in which the electronic apparatus 1 notifies the result of measuring the distance and/or the azimuth using audio information such as sound or voice, the notification interface 7 may be any appropriate speaker or buzzer. The notification interface 7 may include at least one of the functional units as described above.

In one embodiment, for example, when a predetermined object is detected to be located within a predetermined distance and/or a predetermined angle in the vicinity of the vehicle 100, the notification interface 7 may notify accordingly using characters and/or an image. When a predetermined object is detected to be located within the predetermined distance and/or the predetermined angle, the notification interface 7 may display a warning to a driver of the vehicle 100. When a predetermined object is detected to be located within the predetermined distance and/or the predetermined angle, the notification interface 7 may display characters and/or an image indicating the location and/or angle where the predetermined object is detected. When a predetermined object is detected to be located within the predetermined distance and/or the predetermined angle, the notification interface 7 may display digits or an image indicating a distance between the predetermined object and the vehicle 100.

In one embodiment, further, when a predetermined object is detected to be located within the predetermined distance and/or the predetermined angle in the vicinity of the vehicle 100, the notification interface 7 may simply turn on a predetermined warning light. In one embodiment, further, when a predetermined object is detected as being located within the predetermined distance and/or the predetermined angle in the vicinity of the vehicle 100, the notification interface 7 may output audio information indicating a predetermined warning and/or various information.

The status detector 9 detects a predetermined status of a mobile body such as the vehicle in which the electronic apparatus 1 is installed. The status detector 9 can adopt various configurations, according to various mobile bodies equipped with the electronic apparatus 1. Hereinafter, a case in which the electronic apparatus 1 is installed in an automobile (e.g., the vehicle 100) serving as a mobile body will be described, by way of example.

In a case in which the electronic apparatus 1 is installed in an automobile, the status detector 9 detects various conditions of the automobile. Hereinafter, the various conditions of the automobile, which serves as the mobile body, to be detected by the status detector 9 will be described in detail.

For example, the status detector 9 may detect that the moving speed (the traveling speed) of the automobile serving as the mobile body is equal to or less than a predetermined value. In particular, the status detector 9 may detect that the traveling speed of the automobile serving as the mobile body is relatively low, e.g., 8 km/h or less. In this case, the status detector 9 may include, for example, a GPS system or a speedometer of the vehicle and detect the traveling speed of the vehicle. The status detector 9 may include, for example, a sensor for detecting a depression angle of the accelerator pedal or the like and detect the traveling speed of the vehicle. In a case in which the vehicle is electronically controlled, the status detector 9 may detect the traveling speed of the vehicle by acquiring, for example, speed information in information associated with the electronic control. The predetermined value of the moving speed (the traveling speed) of the vehicle to be detected by the status detector 9 may be a value other than 8 km/h. For example, the predetermined value may be 5 km/h, 10 km/h, 50 km/h, 100 km/h, or any other appropriate value.

For example, the status detector 9 may detect a rearward movement (traveling) of the automobile serving as the mobile body. In particular, the status detector 9 may detect that the automobile serving as the mobile body is traveling in a direction substantially opposite to a forward travel direction. The status detector 9 may detect that the vehicle is traveling within a predetermined angle from the direction opposite to the forward travel direction. In this case, the status detector 9 may include the GPS system, a gyroscope or an electronic compass of the vehicle and detect that the vehicle is traveling rearward. The status detector 9 may include a sensor for detecting that, for example, a shift gear is or has been switched to reverse. In a case in which the vehicle is electronically controlled, the status detector 9 may detect that the vehicle is traveling rearward, by acquiring state information (a status) in the information associated with the electronic control.

For example, the status detector 9 may detect a transition from a stationary state of the vehicle serving as the mobile body to a moving (traveling) state. For example, the status detector 9 may detect a transition from the moving (traveling) state of the vehicle serving as the mobile body to a stationary state. In these cases, the status detector 9 may include, for example, the GPS system or the gyroscope of the vehicle and detect the transition of the traveling state of the vehicle. Alternatively, the status detector 9 may include a sensor for detecting depression of the accelerator pedal, or a sensor for detecting that the shift gear is switched to reverse, and detect the transition of the traveling state of the vehicle. In a case in which the vehicle is electronically controlled, the status detector 9 may acquire the state information (the status) in the information associated with the electronic control and detect the transition of the traveling state of the vehicle.

For example, the status detector 9 may detect a braking state of the vehicle serving as the mobile body. In particular, the status detector 9 may detect that the vehicle serving as the mobile body is decelerated by a predetermined value or more due to the braking. In this case, the status detector 9 may include, for example, the GPS system or the gyroscope of the vehicle and detect the braking state of the vehicle. Alternatively, the status detector 9 may include, for example, a sensor for detecting depression of the brake pedal or a sensor for detecting a depression level of the brake pedal, or a sensor for detecting a state of an engine brake, and detect the braking state of the vehicle. In a case in which the vehicle is electronically controlled, the status detector 9 may acquire the state information (the status) in the information associated with the electronic control and detect the braking state of the vehicle.

For example, the status detector 9 may detect creeping of the vehicle serving as the mobile body. During creeping, the vehicle is traveling at a low speed in a state in which the accelerator pedal is not depressed and the engine is idling. In this case, the status detector 9 may include, for example, a sensor for detecting that neither the accelerator pedal nor the brake pedal is depressed and a sensor for detecting that the vehicle is in a traveling (e.g., at a low speed) state, and detect the creeping of the vehicle. At this time, the status detector 9 may perform an inspection to detect that the automatic transmission is in a drive mode. In this case, further, the status detector 9 may include, for example, the GPS system or the gyroscope of the vehicle and detect the creeping of the vehicle. In a case in which the vehicle is electronically controlled, the status detector 9 may acquire the state information (the status) in the information associated with the electronic control and detect the creeping of the vehicle.

For example, the status detector 9 may detect a direction change of the vehicle serving as the mobile body by a predetermined angle or more. In particular, the status detector 9 may detect a relatively large turning angle of the vehicle serving as the mobile body, such as 30 degrees or more. In this case, the status detector 9 may include, for example, the GPS system, the gyroscope or an electronic compass of the vehicle, and detect a direction change of the vehicle by the predetermined angle or more. Alternatively, the status detector 9 may include, for example, a sensor for detecting a steering angle of the steering wheel and detect a direction change of the vehicle by the predetermined angle or more. In a case in which the vehicle is electronically controlled, the status detector 9 may acquire the state information (the status) in the information associated with the electronic control and detect the direction change of the vehicle by the predetermined angle or more.

When the status detector 9 detects any one of the predetermined statuses described above, the status detector 9 notifies the controller 3 of the detected predetermined status. Thus, the controller 3 can recognize that the predetermined status of the mobile body such as, for example, a vehicle equipped with the electronic apparatus 1 is detected.

The predetermined statuses to be detected by the status detector 9 are not limited to the above. In one embodiment, the status detector 9 may detect various statuses that require the driver or the like to pay attention to the surrounding environment relatively close to the mobile body, such as a vehicle equipped with the electronic apparatus 1.

Further, the status detector 9 may be a part of the mobile body or the like equipped with the electronic apparatus 1 or may be various sensors attached to the mobile body or the like equipped with the electronic apparatus 1. The status detector 9 may have any configuration capable of detecting the predetermined status of the mobile body such as a vehicle equipped with the electronic apparatus 1.

The electronic apparatus 1 according to the embodiment having a minimum configuration may include the controller 3 alone. On the other hand, the electronic apparatus 1 according to the embodiment may include at least one of the sensors 10 and any one of the direction detector 5, the notification interface 7, and the status detector 9, in addition to the controller 3, as illustrated in FIG. 3. As described above, the electronic apparatus 1 according to the embodiment can have various configurations. In a case in which the electronic apparatus 1 according to the embodiment is installed in the vehicle 100, the controller 3, the direction detector 5, the notification interface 7, and the status detector 9 may be arranged at any appropriate locations such as inside the vehicle 100. In one embodiment, on the other hand, at least one of the controller 3, the direction detector 5, the notification interface 7, and the status detector 9 may be arranged on the exterior of the vehicle 100.

Next, the sensors 10 according to the embodiment will be described. Hereinafter, a case in which the sensors 10 according to the embodiment are radar sensors configured to transmit and receive radio waves will be described.

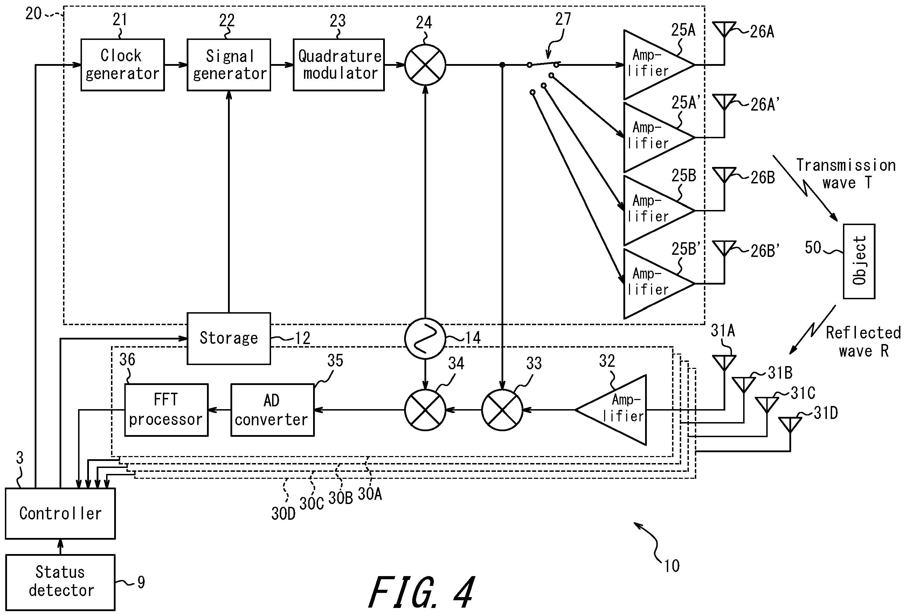

FIG. 4 is a functional block diagram schematically illustrating the configuration of the sensors 10 according to the embodiment. Hereinafter, the sensors 10 according to the embodiment will be described with reference to FIG. 4. In FIG. 4, a sensor 10 is illustrated as a representative example of the sensors 10A, 10B, 10C, and 10D illustrated in FIGS. 1 to 3.

As illustrated in FIG. 4, in broad terms the sensor 10 according to the embodiment includes a transmitter 20 and a receiver 30. The transmitter 20 of the sensor 10 according to the embodiment includes four transmission antennas 26A, 26B, 26C, and 26D, as illustrated in FIG. 4. In the following description, when the transmission antenna 26A, the transmission antenna 26B, the transmission antenna 26C, and the transmission antenna 26D are not distinguished from each other, they will be simply referred to as "transmission antennas 26". Further, the sensor 10 according to the embodiment includes four receivers 30A, 30B, 30C, and 30D, as illustrated in FIG. 4. In the following description, when the receiver 30A, the receiver 30B, the receiver 30C, and the receiver 30D are not distinguished from each other, they will be simply referred to as "receiver 30".

FIG. 4 schematically illustrates a state in which the transmission antennas 26 of the transmitter 20 transmits transmission waves T. In FIG. 4, reflected waves R refer to reflected waves from among the transmission waves T reflected by the object 50. Here, the object 50 may be a vehicle other than the vehicle 100, such as the vehicle 200, or any object other than the vehicle 100, such as a pedestrian or an obstacle. FIG. 4 also schematically illustrates a state in which the reception antennas 31 of the receiver 30 receive the reflected waves R. The storage 12 and a synthesizer 14 illustrated in FIG. 4 may be included in the transmitter 20 or the receiver 30 or provided separately from the transmitter 20 or the receiver 30.

The synthesizer 14 is an oscillating circuit using electronic high frequency synthesis and serves as a radar signal source. The synthesizer 14 may be, for example, a frequency synthesizer IC or a frequency synthesizer circuit.

The storage 12 may be a semiconductor memory, a magnetic memory, or the like. The storage 12 may be connected to the controller 3. The storage 12 may store various information, programs to be executed by the controller 3, and the like. The storage 12 may function as a working memory of the controller 3. The storage 12 may be included in the controller 3.

The transmitters 20 and the receivers 30 can have the same configurations as a known radar sensor, including the storage 12 and the synthesizer 14, and employ the same functional unit as the known radar sensor. Hereinafter, thus, descriptions similar to those of known radar sensors will be simplified or omitted, as appropriate.

As illustrated in FIG. 4, the transmitters 20 may include, for example, a clock generator 21, a signal generator 22, a quadrature modulator 23, a mixer 24, a transmission amplifier 25, the transmission antennas 26, and a switch 27.

In the transmitter 20, the clock generator 21 generates a clock signal CLK when caused by the controller 3. The clock signal generated by the clock generator 21 is supplied to the signal generator 22.

The signal generator 22 generates a transmission signal, based on the clock signal generated by the clock generator 21 and a transmission signal sequence retrieved from the storage 12. The signal generated by the signal generator 22 may be, for example, a frequency-modulated continuous wave (FM-CW) system radar signal. However, the signal generated by the signal generator 22 is not limited to the FM-CW system signal. The signal generated by the signal generator 22 may be of various system including, for example, a pulse system, a pulse compression system (a spread spectrum system), or a frequency CW (Continuous Wave) system.

Further, for example, the signal generator 22 is caused to allocate the frequency of the transmission signal by the controller 3 when generating the transmission signal. In one embodiment, a band used by the signal generator 22 to allocate the frequency of the transmission signal is determined as below.

For example, when a millimeter wave radar of 79 GHz band is used, use of a 4 GHz band allocated to a band from 77 GHz to 81 GHz is stipulated. In this case, the 4 GHz band assigned to the band from 77 GHz to 81 GHz may be used. In this case, for example, a 1 GHz band may be used as a part of the 4 GHz band assigned to the band from 77 GHz to 81 GHz. The transmission signal generated by the signal generator 22 is supplied to the quadrature modulator 23.

The quadrature modulator 23 performs quadrature modulation on the transmission signal supplied from the signal generator 22. The signal subjected to the quadrature modulation performed by the quadrature modulator 23 is supplied to the mixer 24.

The mixer 24 is connected to a transmission amplifier 25A, a transmission amplifier 25A', a transmission amplifier 25B, or a transmission amplifier 25B', via the switch 27. The mixer 24 performs frequency conversion by mixing the signal subjected to the quadrature modulation performed by the quadrature modulator 23 with the signal supplied from the synthesizer 14 and raises the frequency of the transmission signal to a center frequency of the millimeter wave. The transmission signal subjected to the frequency conversion performed by the mixer 24 is supplied to the transmission amplifier 25A, the transmission amplifier 25A', the transmission amplifier 25B, or the transmission amplifier 25B'.

The transmission amplifier 25A is connected to the transmission antenna 26A. The transmission amplifier 25A' is connected to the transmission antenna 26A'. The transmission amplifier 25B is connected to the transmission antenna 26B. The transmission amplifier 25B' is connected to the transmission antenna 26B'. In the below description, when the transmission amplifier 25A, the transmission amplifier 25A', the transmission amplifier 25B, and the transmission amplifier 25B' are not distinguished from each other, they will be simply referred to as "transmission amplifier 25". The transmission amplifier 25 increases transmission power of the transmission signal subjected to the frequency conversion performed by the mixer 24. The transmission signal having transmission power increased by the transmission amplifier 25 is transmitted as transmission waves T from the transmission antennas 26. In one embodiment, the transmission waves T are transmitted from at least one of the transmission antenna 26A, the transmission antenna 26A', the transmission amplifier 25B, and the transmission amplifier 25B'.

The switch 27 switches the antenna from which the transmission waves T are transmitted between the transmission antenna 26A, the transmission antenna 26A', the transmission antenna 26B, and the transmission antenna 26B'. The switch 27 may be, for example, caused by the controller 3 to switch the transmission antennas 26 to transmit the transmission waves T.

As illustrated in FIG. 4, when the object 50 is located within a range of the transmission waves T transmitted from the transmission antennas 26, a subset of the transmission waves T are reflected by the object 50 and becomes the reflected waves R.

FIG. 4 collectively illustrates the receiver 30A including the reception antenna 31A, the receiver 30B including the reception antenna 31B, the receiver 30C including the reception antenna 31C, and the receiver 30D including the reception antenna 31D. Hereinafter, a receiver 30 will be described as a representative example of the receiver 30A, the receiver 30B, the receiver 30C, and the receiver 30D illustrated in FIG. 4. The receiver 30A, the receiver 30B, the receiver 30C, and the receiver 30D can have the same configurations.

As illustrated in FIG. 4, the receiver 30 may include, for example, the reception antennas 31, a reception amplifier 32, a mixer 33, a mixer 34, an AD converter 35, and an FFT processer 36.

In the receiver 30, the reception antennas 31 receive the reflected waves R. In one embodiment, in particular, the reflected waves R are received by at least one of the reception antenna 31A, the reception antenna 31B, the reception antenna 31C, and the reception antenna 31D. The received signal based on the reflected waves R received by the reception antennas 31 is supplied to the reception amplifier 32. The reception amplifier 32 may be a low noise amplifier to amplify the received signal supplied from the reception antennas 31 with a low noise level. The received signal amplified by the reception amplifier 32 is supplied to the mixer 33.

The mixer 33 generates a beat signal by multiplying the received signal of an RF frequency supplied from the reception amplifier 32 by the transmission signal having the frequency converted by the mixer 24 of the transmitter 20. The beat signal generated by the mixer 33 is supplied to the mixer 34.

The mixer 34 performs frequency conversion by mixing the beat signal generated by the mixer 33 with the signal supplied from the synthesizer 14 and reduces the frequency of the beat signal to an IF frequency. The beat signal subjected to the frequency conversion performed by the mixer 34 is supplied to the AD converter 35.

The AD converter 35 may be any analog-digital conversion circuit (Analog to Digital Converter (ADC)). The AD converter 35 digitizes an analog beat signal supplied from the mixer 34. The beat signal digitized by the AD converter 35 is supplied to the FFT processer 36.

The FFT processer 36 may be any circuit or chip that performs Fast Fourier Transform (FFT) processing. The FFT processer 36 performs FFT processing on the beat signal digitized by the AD converter 35. A result of the FFT processing performed by the FFT processer 36 is supplied to the controller 3.

A frequency spectrum is obtained as a result of the FFT processing of the beat signal performed by the FFT processer 36. From this frequency spectrum, the controller 3 can determine whether the predetermined object 50 is located within a range of the beam radiated by the sensor 10. That is, the controller 3 can determine whether the predetermined object 50 is located within the range of the beam radiated by the sensor 10, based on the beat signal subjected to the FFT processing. Also, the controller 3 can measure the distance between the sensor 10 and the object 50 when the predetermined object 50 is located, based on the beat signal subjected to the FFT processing. Further, the controller 3 can determine a positional relationship between the sensor 10 and the object 50 when the predetermined object 50 exists, based on the beat signal subjected to the FFT processing. In the embodiment, as described above, the distance to the object 50 may be measured based on the beat signal obtained based on the signal transmitted as the transmission waves T and the signal received as the reflected waves R. Because a distance measuring technique per se for measuring a distance based on a beat signal acquired using a millimeter wave radar of, for example, a 79 GHz band or the like is a well-known technique, a more detailed description thereof will be omitted.

Further, the controller 3 can also determine the azimuth from the sensor 10 to the object 50 when the predetermined object 50 exists, based on the beat signal subjected to the FFT processing. In one embodiment, as described above, the azimuth with respect to the object 50 may be measured based on the beat signal obtained from the signal transmitted as the transmission waves T and the signal received as the reflected waves R. In this case, the controller 3 may measure the azimuth to the object 50 by comparison with the azimuth of the electronic apparatus 1 detected by the direction detector 5. The measurement by the electronic apparatus 1 is not limited to the azimuth with respect to the object 50. In one embodiment, the electronic apparatus 1 may measure a direction or an orientation from the sensor 10 of the electronic apparatus 1 toward the object 50. Because an angle measurement technique per se for measuring an azimuth with respect to a predetermined object based on a beat signal acquired using a millimeter wave radar of, for example, a 79 GHz band or the like is a well-known technique, a more detailed description thereof will be omitted.

Next, a virtual array antenna that includes the sensor 10 according to the embodiment will be described.

In one embodiment, the sensor 10 may include a plurality of antennas. In one embodiment, further, the sensor 10 including at least one of the transmission antennas 26 and the reception antennas 31 can function as a virtual array antenna that includes these antennas. A configuration of such an antenna will be described below.

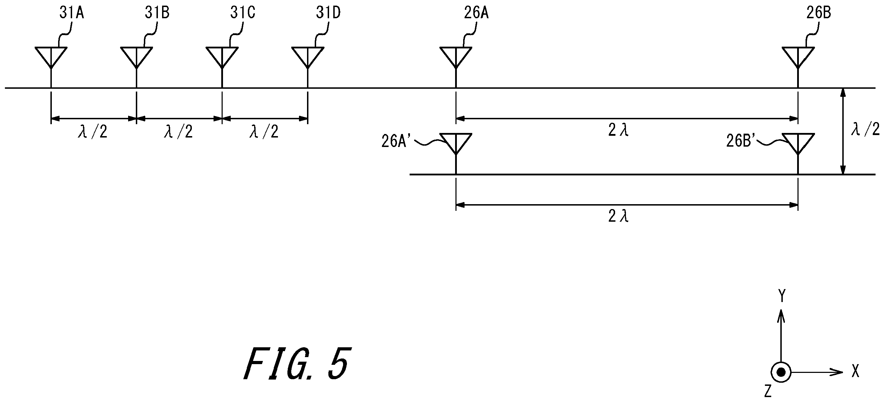

FIG. 5 is a diagram schematically illustrating a virtual array antenna that includes the sensor 10 according to the embodiment. FIG. 5 is a diagram illustrating the virtual array antenna that includes four transmission antennas 26 and four reception antennas 31 included in the sensor 10 illustrated in FIG. 4.

As illustrated in FIG. 5, the sensor 10 includes four transmission antennas 26A, 26B, 26A', and 26B', and four reception antennas 31A, 31B, 31C and 31D. In one embodiment, these antennas are arranged side by side at predetermined intervals to configure a virtual array antenna that functions as a maximum of 16 antennas (4×4 = 16).

The above example is generalized to assume a case in which, for example, the M-number of transmission antennas 26 and the N-number of reception antennas 31 are arranged for transmitting and receiving millimeter radar waves. Here, as illustrated in FIG. 5, the M-number of first transmission antennas 26 (e.g., two transmission antennas 26A and 26B) are arranged at intervals of (λ/2) × N = 2λ in the horizontal direction (in an X-axis direction). When the M-number of, i.e., a plurality of first transmission antennas 26 are installed in this manner, the plurality of first transmission antennas 26 sequentially transmit the transmission waves T.

As illustrated in FIG. 5, further, the N-number of reception antennas 31 (e.g., the four reception antennas 31A, 32B, 32C, and 32D) are arranged at intervals of λ/2 in the horizontal direction (in the X-axis direction) substantially on an extension line of the arrangement of the first transmission antennas 26. When the N-number of, i.e., a plurality of reception antennas 31 are installed in this manner, the plurality of reception antennas 31 sequentially receive the reflected waves R. The reception signal thus received can be regarded as a reception signal transmitted and received using the N×M-number of antennas. In one embodiment, the number of antennas that function as the virtual array antennas may be M×N as described above, where M refers to the number of the antennas for transmitting the transmission waves T and N refers to the number of antennas for receiving the reflected waves R.

As illustrated in FIG. 5, for example, a case in which two transmission antennas 26 are arranged at intervals of 2λ on parallel lines on which four reception antennas 31 are arranged at intervals of λ/2 is assumed. In this case, the reflected waves of the signal transmitted from one transmission antenna 26 are received by the four reception antennas 31 (0, λ/2, λ, and 3λ/2). The reflected waves transmitted from another transmission antenna 26 are received by the four reception antennas 31, in a manner staggering by 2λ (0+2λ, λ/2+2λ, λ+2λ, and 3λ/2+2λ). In this case, thus, virtual eight reception antennas 31 in total receive the waves at intervals of λ/2 (0, λ/2, λ, 3λ/2, 0+2λ, λ/2+2λ, λ+2λ, and 3λ/2+2λ).

In one embodiment, further, the M-number of second transmission antennas 26' (e.g., two transmission antennas 26') are arranged approximately in parallel with the arrangement of the first transmission antennas 26 (e.g., two transmission antennas 26A' and 26B'), as illustrated in FIG. 5. Here, an array of the second transmission antennas 26' and an array of the first transmission antennas 26 are arranged in the vertical direction (in a Y-axis direction) at intervals of λ/2 from each other, as illustrated in FIG. 5. That is, a distance between a straight line on which the first transmission antennas 26 are arranged and a straight line on which the second transmission antennas 26' are arranged is λ/2. When there are the M-number of, i.e., a plurality of second transmission antennas 26', they are arranged in the horizontal direction (in the X-axis direction) at intervals of 2λ, in a manner similar to the first transmission antennas 26.

In this way, an arrival direction of the reflected waves R can be estimated from the signals transmitted and received by the first transmission antennas 26 and the second transmission antennas 26', functioning function as the N × M-number of virtual array antennas, and the reception antennas 31, using a known algorithm. As algorithms used to estimate the arrival direction, for example, ESPRIT (Estimation of Signal Parameters via Rotational Invariance Techniques) and MUSIC (MUltiple SIgnal Classification) are known. Generally, in estimation of the arrival direction, as the number of antennas used for transmission and reception increases, the angular resolution improves and the number of objects whose angles can be simultaneously measured increases.

The electronic apparatus 1 according to the embodiment operates by enabling a change in the radiation direction of the transmission waves T. In particular, the electronic apparatus 1 can operate in an operation mode in which the radiation direction of the transmission waves T corresponds to a first direction (hereinafter, abbreviated as "first mode", as appropriate). The electronic apparatus 1 can also operate in an operation mode in which the radiation direction of the transmission waves T corresponds to a second direction different from the first direction (hereinafter, abbreviated as "second mode", as appropriate). Here, the antennas used for transmitting the transmission waves T and receiving the reflected waves R may be antennas that function as the virtual array antennas described above or may be antennas that are physically installed.

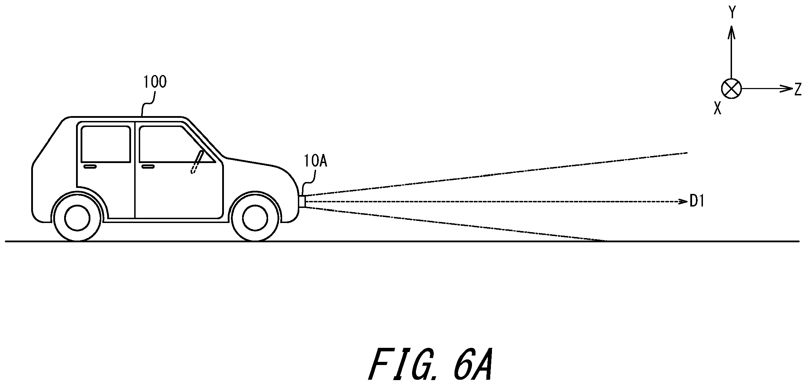

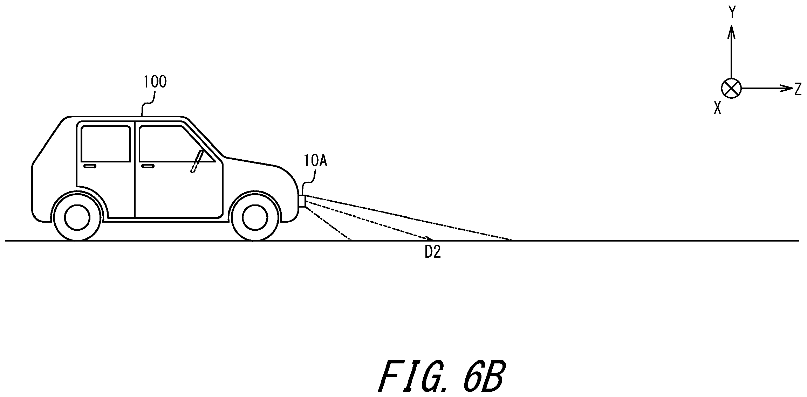

FIG. 6A and FIG. 6B are diagrams illustrating directions in which the transmission waves T are radiated in the first mode and in the second mode. FIG. 6A and FIG. 6B are diagrams schematically illustrating a state in which transmission waves are radiated from the sensor 10A mounted on the front side of the vehicle 100 illustrated in FIG. 1 and FIG. 2. FIG. 6A is a diagram illustrating a direction in which the transmission waves T are radiated in the first mode. FIG. 6B is a diagram illustrating a direction in which the transmission waves T are radiated in the second mode.

As illustrated in FIG. 6A, the first mode described above may be an operation mode in which radiation of the transmission waves T is directed in a first direction D1. In one embodiment, as illustrated in FIG. 6A, the first direction D1 may be closer to horizontal (a Z-axis direction) than a second direction D2 illustrated in FIG. 6B. That is, the first direction D1 may be a substantially horizontal direction (the Z-axis direction) when viewed from the vehicle 100, as illustrated in FIG. 6A. In one embodiment, the first direction D1 does not need to strictly be the horizontal direction (Z-axis direction) when viewed from the vehicle 100. In FIG. 6A, the sensor 10A is mounted on the horizontal direction on the front side of the vehicle 100. Here, the controller 3 of the electronic apparatus 1 may cause the sensor 10A to radiate transmission waves that travel straight forward (in a positive Z-axis direction illustrated in FIG. 6A and FIG. 6B) in the first mode. In this case, thus, the sensor 10A radiates the transmission waves in the horizontal direction from the front side of the vehicle 100.

As illustrated in FIG. 6B, further, the second mode described above may be an operation mode in which the transmission waves T are radiated in the second direction D2 downward from the first direction D1. Here, "downward" may refer to downward in the vertical direction or the perpendicular direction and, in particular, may be in a negative Y direction illustrated in FIG. 5, FIG. 6A, and FIG. 6B. As illustrated in FIG. 6B, that is, the second direction D2 may be a direction that is downward (in a negative Y-axis direction) from a substantially horizontal direction (the Z-axis direction) viewed from the vehicle 100. In one embodiment, the second direction D2 does not need to be strictly downward or vertical (in the negative Y-axis direction) viewed from the vehicle 100. Here, the controller 3 of the electronic apparatus 1 may cause the sensor 10A to radiate transmission waves that travel straight in a direction different from the forward direction (a positive Z-axis direction illustrated in FIGS. 6A and 6B) in the second mode. Then, the direction in which the sensor 10A radiates the transmission waves that travel straight in the second mode may be directed downward (in the Y-axis negative direction) from the horizontal direction (the Z-axis direction) viewed from the vehicle 100. In this case, thus, the sensor 10A radiates the transmission waves from the front side of the vehicle 100 in a direction downward from the horizontal direction.

In one embodiment, to make the radiation direction of the transmission waves variable in this way, the configuration illustrated in FIG. 4 may be adopted and, simultaneously, a plurality of transmission antennas 26 each having a different radiation direction of the transmission waves may be mounted. In the first mode, that is, the transmission antennas 26 that direct radiation of the transmission waves T in the first direction D1 may be used. Here, the transmission antennas 26 that direct radiation of the transmission waves T in the first direction D1 may be a transmission antenna having directivity such that radiation of the transmission waves T is directed in the first direction D1. As such a transmission antenna, for example, the first transmission antennas 26 (transmission antennas 26A and 26B) may be adopted. In this case, the transmission antennas 26 that direct radiation of the transmission waves T in the second direction D2 may be used in the second mode. Here, the transmission antennas 26 that direct radiation of the transmission waves T in the second direction D2 may be a transmission antenna having directivity such that radiation of the transmission waves T is directed in the second direction D2 (i.e., having a downward directivity). As such a transmission antenna, for example, the second transmission antennas 26' (the transmission antennas 26A' and 26B') may be adopted. In one embodiment, as described above, different transmission antennas 26 may radiate the transmission waves T between the first mode and the second mode.

In one embodiment, further, to change the radiation direction of the transmission waves, the phases of a plurality of antennas 26 may be controlled, rather than that switching a plurality of transmission antennas having different directivities.

In one embodiment, that is, by controlling the phases of the plurality of transmission antennas 26, the radiation direction of the transmission waves from the transmission antennas 26 can be changed. In the first mode, thus, the phases of the plurality of transmission antennas 26 arranged in the vertical direction (in the Y-axis direction) may be controlled such that radiation of the transmission waves T is directed in the first direction D1. In this case, also, the phases of the plurality of transmission antennas 26 arranged in the vertical direction (Y-axis direction) may be controlled so that radiation of the transmission waves T is directed in the second direction D2 in the second mode. In this case, each of the plurality of transmission antennas 26 may have a normal directivity.

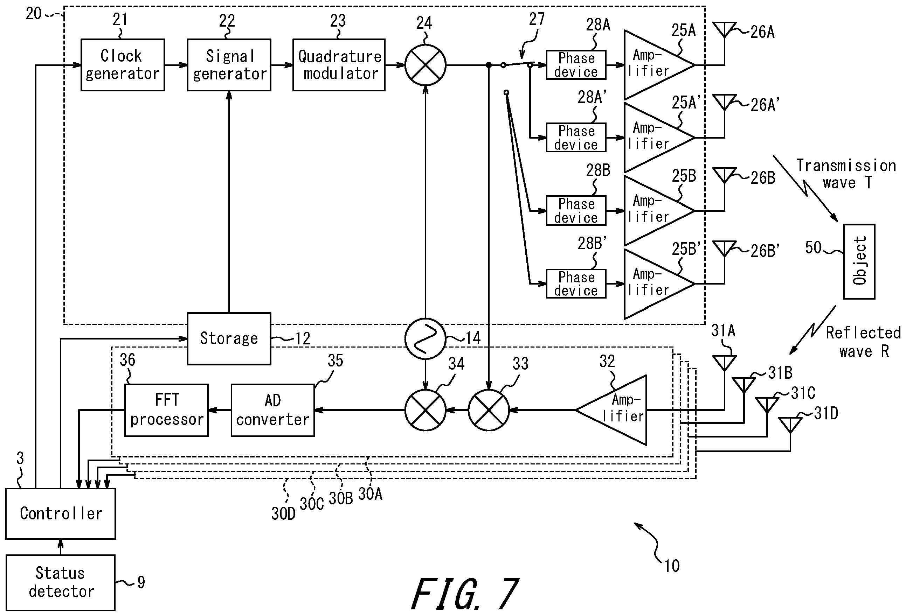

FIG. 7 is a functional block diagram schematically illustrating a configuration of the sensor 10 according to an embodiment. The sensor 10 illustrated in FIG. 7 can change the radiation direction of the transmission waves from the transmission antennas 26 by controlling the phases of the plurality of transmission antennas 26. Hereinafter, features of FIG. 7 different from those of FIG. 4 will be described.

In the sensor 10 illustrated in FIG. 7, a phase device 28A is connected between the switch 27 and the transmission amplifier 25A. Similarly, a phase device 28A' is connected between the switch 27 and the transmission amplifier 25A'. Similarly, a phase device 28B is connected between the switch 27 and the transmission amplifier 25B. Similarly, a phase device 28B' is connected between the switch 27 and the transmission amplifier 25B'. Here, each of the phase device 28A, the phase device 28A', the phase device 28B, and the phase device 28B' may be any phase control circuit or the like capable of controlling the phase of the transmission signal. In the sensor 10 illustrated in FIG. 7, also, a connection point between the phase device 28A and the switch 27 and a connection point between the phase device 28A' and the switch 27 are common. In the sensor 10, also, a connection point between the phase device 28B and the switch 27 and a connection point between the phase device 28B' and the switch 27 are common. In the sensor 10 illustrated in FIG. 7, thus, the transmission signal having the frequency converted by the mixer 24 passes through the switch 27 and is selectively provided to the transmission amplifier 25A and the transmission amplifier 25A' or to the transmission amplifier 25B and the transmission amplifier 25B'. Other configurations of the sensor 10 are similar to those of the sensor 10 described in FIG. 4.

By adopting the sensor 10 configured as illustrated in FIG. 7, the directivity of the transmission antennas 26 in the vertical direction can be controlled. As illustrated in FIGS. 6A and 6B, for example, by performing phase control in combination of the transmission antenna 26A and the transmission antenna 26A', the directivity in the vertical direction (in the Y-axis direction) can be controlled. In performing such phase control of the transmission antennas 26, antenna simulation may be conducted in advance to understand the directions of the synthesized waves from the plurality of transmission antennas 26. Further, for example, the phase control may be performed after confirming whether the transmission waves are directed in a desired direction by measuring a radiation pattern when the phases of the transmission antennas 26 are actually changed.

In one embodiment, as described above, when the transmission antennas 26 are arranged at intervals of λ/2 in the vertical direction (in the Y-axis direction), the transmission antennas 26 can form a desired beam while suppressing side lobes. For example, by arranging the transmission antennas 26 as illustrated in FIG. 5, a plurality of different radiation patterns can be formed in the vertical direction (Y-axis direction). In one embodiment, in particular, by controlling the phases of the plurality of transmission antennas 26, the directions to radiate the transmission waves from the transmission antennas 26 can be changed. For example, by controlling the phases of the plurality of transmission antennas 26 arranged in the vertical direction (Y-axis direction) as illustrated in FIG. 5, the direction of the transmission waves radiated in the vertical direction (Y-axis direction) can be changed.

In one embodiment, furthermore, electric power used for transmitting the transmission waves T may be different between the first mode and the second mode. For example, in the second mode illustrated in FIG. 6B, there may be a case in which reducing electric power used for transmitting the transmission waves T to be less than that of the first mode illustrated in FIG. 6A may have no significant impact. Thus, in the second mode, for example, the transmission waves T may be radiated using less electric power than that of the first mode. In one embodiment, in this way, electric power used for transmitting the transmission waves T in the second mode may be less than that for transmitting the transmission waves T in the first mode. This enables a reduction in power consumption during operation in the second mode, as compared to power consumption during operation in the first mode. This further enables an expectation that the operation in the second mode can reduce interference as compared to the operation in the first mode.

Referring to FIG. 6A and FIG. 6B, a state in which the transmission waves are radiated from the sensor 10A alone mounted on the front side of the vehicle 100 has been described. However, the other sensors 10 mounted on the vehicle 100 may change the directions for transmitting the transmission waves T between the first mode and the second mode. In the first mode, for example, all or at least one of the sensor 10A, the sensor 10B, the sensor 10C, and the sensor 10D mounted on the vehicle 100 illustrated in FIG. 2 may transmit the transmission waves T in the horizontal direction (in a ZX plane direction). In this case, in the second mode all or at least one of the sensor 10A, the sensor 10B, the sensor 10C, and the sensor 10D may transmit the transmission waves T downward (in the negative Y-axis direction) from the horizontal direction (in the ZX plane direction). In the second mode, at least one of the sensor 10A, the sensor 10B, the sensor 10C, and the sensor 10D may transmit the transmission waves T downward (in the negative Y-axis direction) from the horizontal direction (in the ZX plane direction).

Next, operation of the electronic apparatus 1 according to the embodiment will be described.

As described above, the electronic apparatus 1 may measure the azimuth with respect to the object 50, based on the signal transmitted as the transmission waves T and the signal received as the reflected waves R reflected by the object 50 from among the transmission waves T. The electronic apparatus 1 can operate in the first mode and the second mode described above. Here, the direction in which the transmission waves T are transmitted in the first mode is approximated to the horizontal direction, as compared to the direction in which the transmission waves T are transmitted in the second mode. Further, the electric power used to transmit the transmission waves T in the first mode may be greater than that used to transmit the transmission waves T in the second mode. In the measurement in the first mode, thus, although the power consumption involved in the measurement is relatively large, the radiated transmission waves T reach a relatively long distance. On the other hand, the direction in which the transmission waves T are radiated in the second mode is directed downward from the direction in which the transmission waves T are radiated in the first mode. Also, the electric power used to transmit the transmission waves T in the second mode may be less than that used for transmitting the transmission waves T in the first mode. Accordingly, in the measurement in the second mode, although the radiated transmission waves T reach a relatively short distance, the power consumption involved in the measurement is relatively small. In one embodiment, thus, the controller 3 controls switching between the first mode and the second mode. Hereinafter, the operation of the electronic apparatus 1 according to the embodiment will be further described.

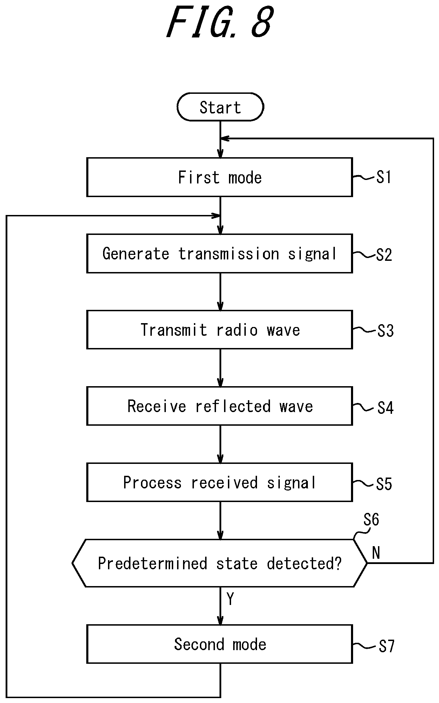

FIG. 8 is a flowchart illustrating operation of the electronic apparatus 1 according to the embodiment.

The operation illustrated in FIG. 8 may be initiated when, for example, the electronic apparatus 1 measures an azimuth with respect to a predetermined object.

When the operation illustrated in FIG. 8 is initiated, the controller 3 first controls to set the operation mode of the electronic apparatus 1 to the first mode (step S1). In step S1, that is, the controller 3 sets the operation mode in which the transmission antennas 26 radiate the transmission waves T in the first direction D1 illustrated in FIG. 6A by way of example. As described above, because during the operation in the first mode the transmission waves T are radiated in the substantially horizontal direction (in the Z-axis direction), the transmission waves T can reach a relatively long distance. Thus, the electronic apparatus 1 can accurately measure an azimuth with respect to an object located in a relatively long distance.

When the first mode is set in step S1, the controller 3 controls such that a transmission signal to be transmitted from the sensor 10 is generated (step S2). In step S2, the transmission signal is generated by primarily performing from the operation of the clock generator 21 of the transmitter 20 to the operation of the transmission amplifier 25 as described with reference to FIG. 4 or FIG. 7. Hereinafter, further descriptions of content already described with reference to FIG. 4 or FIG. 7 will be omitted.

When the transmission signal is generated in step S2, the controller 3 causes the transmission antennas 26 to transmit the transmission signal using radio waves (step S3). In step S3, the radio waves are transmitted by primarily performing from the operation of the transmission amplifier 25 to the operation of the transmission antennas 26 described with reference to FIG. 4 or FIG. 7.

When the electronic apparatus 1 transmits signals from the plurality of sensors 10, the controller 3 may cause the plurality of sensors 10 to sequentially, rather than simultaneously, transmit the signals in step S2 and step S3.

When the radio waves are transmitted in step S3, the controller 3 causes the reception antennas 31 to receive the reflected waves (step S4). In step S4, the reflected waves are received by primarily performing from the operation of the reception antennas 31 of the receiver 30 to the operation of the reception amplifier 32 described with reference to FIG. 4 or FIG. 7. Here, the reception antennas 31 receive the reflected waves from among the transmission waves transmitted by the transmission antennas 26 and reflected by the object 50.

When the reflected waves are received in step S4, the controller 3 controls such that the received signal based on the received reflected waves is processed (step S5). In step S5, the received signal is processed by primarily performing from the operation of the reception amplifier 32 to the operation by the FFT processer 36 described in FIG. 4 or FIG. 7. By the operation in step S5, the controller 3 can recognize whether the predetermined object 50 is located within the predetermined distance from the sensor 10. By the operation in step S5, also, when the predetermined object 50 is located within the predetermined distance from the sensor 10, the controller 3 can recognize (measure) the azimuth with respect to the predetermined object 50 from the sensor 10. Here, the controller 3 may measure the azimuth toward the predetermined object 50 from the electronic apparatus 1, based on the azimuth of the electronic apparatus 1 (or the vehicle 100 equipped with the electronic apparatus 1). By the operation in step S5, further, when the predetermined object 50 is located within the predetermined distance from the sensor 10, the controller 3 may recognize the distance to the predetermined object 50 from the sensor 10. Here, the predetermined object 50 may be various objects including a nearby vehicle (a vehicle in front of or behind the mobile body in the same lane, or an oncoming vehicle), a pedestrian, an obstacle, or the like, as described above.

When the received signal is processed in step S5, the controller 3 determines whether a predetermined status of the mobile body such as the vehicle 100 equipped with the electronic apparatus 1 is detected (step S6). In step S6, the predetermined status may be various statuses as described above. For example, when the mobile body equipped with the electronic apparatus 1 is the vehicle 100, the predetermined status may include a status in which a moving speed (running speed) of the vehicle 100 is equal to or lower than a predetermined value, or a status in which the vehicle 100 is moving (running) rearward. The predetermined status may be, for example, a status in which the vehicle 100 transitions to a moving (running) state from a stationary state, or a status in which the vehicle 100 transitions to the stationary state from the moving (running) state. The predetermined status may be, for example, a braking state of the vehicle 100, a creeping state of the vehicle 100, or a direction change at a predetermined angle or larger. Such a predetermined status may be detected by the status detector 9, as described above.

When it is determined in step S6 that the predetermined status is not detected, the controller 3 returns to step S1 and continues the operation (to measure the angle) in the first mode. On the other hand, when it is determined in step S6 that the predetermined status is detected, the controller 3 controls such that the operation by the electronic apparatus 1 is set to the second mode (step S7). In step S7, that is, the controller 3 sets the operation mode in which the transmission antennas 26 radiate the transmission waves T in the second direction D2 illustrated in FIG. 6B by way of example. As described above, because in the operation in the second mode the transmission waves T are transmitted downward (in the negative Y-axis direction) from the horizontal direction (the Z-axis direction), the azimuth with respect to the object in the vicinity of the mobile body such as the vehicle 100 equipped with the electronic apparatus 1 can be measured relatively accurately. In this case, accordingly, the electronic apparatus 1 can improve the safety in the vicinity of the mobile body such as the vehicle 100 equipped with the electronic apparatus 1. Further, although during the operation in the second mode radiation of the transmission waves T may be in a relatively short distance, the power consumption for the measurement can be relatively small. In this case, thus, the electronic apparatus 1 can suppress the power consumption involved in the measurement.

When the second mode is set in step S7, the controller 3 performs the operations in steps S2 to S5 to transmit the transmission signal as the transmission waves and processes the received signal based on the received reflected waves. Accordingly, the electronic apparatus 1 can focus on the measurement of the azimuth in the vicinity of the mobile body such as the vehicle 100.

In the embodiment, as described above, the controller 3 controls switching between the first mode and the second mode. Further, the controller 3 performs control to switch to the second mode when the predetermined status as described above, such as the vehicle 100 running at a low speed, is detected in the first mode.

As described above, in the electronic apparatus 1 according to the embodiment the transmission waves T are radiated downward (in the negative Y-axis direction) in a predetermined status such as when the mobile body is traveling at a low speed. Thus, the electronic apparatus 1 according to the embodiment can relatively accurately measure the azimuth with respect to the object in the vicinity of the mobile body equipped with the electronic apparatus 1. Accordingly, the electronic apparatus 1 of the embodiment can improve the safety in the vicinity of the mobile body traveling at a low speed. Further, the electronic apparatus 1 according to the embodiment reduces electric power used for the transmission of the transmission waves in a predetermined status such as when the mobile body is traveling at a low speed. Thus, the electronic apparatus 1 according to the embodiment can reduce the power consumption. On the other hand, the electronic apparatus 1 according to the embodiment transmits the transmission waves T in a substantially horizontal direction (in the Z-axis direction), unless a predetermined status is detected. Thus, the electronic apparatus 1 according to the embodiment can accurately measure the azimuth with respect to the object located at a relatively long distance in a normal status other than the predetermined status. Accordingly, the electronic apparatus 1 of the embodiment can improve the safety in measuring the azimuth, in accordance with various statuses.

In particular, when the electronic apparatus 1 is installed in a mobile body such as the vehicle 100, it is desired to ensure the safety in the vicinity of the vehicle 100 in the predetermined status such as when the vehicle 100 is traveling at a low speed. On the other hand, in the predetermined status such as when the vehicle 100 is traveling at a low speed, it is assumed that situations distant from the vehicle 100 are not as important as the safety in the vicinity of the vehicle 100. In addition to the status in which the vehicle 100 is traveling at a low speed, a similar status may occur when the vehicle 100 moves backward, starts, stops, brakes, creeps, turns sharply, or the like. The electronic apparatus 1 according to the embodiment can appropriately and reasonably contribute to the safety in various statuses described above.

Next, determination of whether the object 50 is detected within the predetermined distance will be further described, in association with step S5 of FIG. 8.

Generally, CFAR (Constant False Alarm Rate) processing is known as a technology for automatically detect a target in radar signal processing. It is also known that CA (Cell Averaging) CFAR processing is effective for cases in which a received signal includes a target signal and white noise such as receiver noise.

In the electronic apparatus 1 according to the embodiment, as described above, a frequency spectrum is obtained when the FFT processer 36 performs the FFT processing on the beat signal obtained as a result of the processing by the mixer 33 illustrated in FIG. 4. In one embodiment, thus, the controller 3 may determine that the object 50 is detected within the predetermined distance, in a case in which a ratio of a peak to an average power in the frequency spectrum thus obtained exceeds a threshold value. Here, the average power in the frequency spectrum varies with time. Thus, the threshold value of the ratio of the peak to the average power may be a variable threshold value that varies with time.

In the embodiment, as described above, the controller 3 may determine that the object 50 is detected within the predetermined distance, in a case in which a ratio of the peak in the frequency spectrum obtained based on the beat signal to an average intensity in the frequency spectrum exceeds a predetermined threshold value.

Although the disclosure has been described based on the figures and the embodiments, it is to be understood that various changes and modifications may be implemented based on the present disclosure by those who are ordinarily skilled in the art. Accordingly, such changes and modifications are included in the scope of the disclosure herein. For example, functions and the like included in each functional unit may be rearranged without logical inconsistency. A plurality of units or steps may be combined or subdivided. Also, each of the above embodiments does not need to be practiced strictly following the description thereof but may be implemented by appropriately combining or partially omitting features. That is, the contents of the disclosure can be varied or modified based on the present disclosure by those who are ordinarily skilled in the art. Accordingly, such changes and modifications are included in the scope of the disclosure herein. For example, each functional unit, each means, each step and the like of each embodiment may be added to another embodiment or replace each functional unit, each means, each step or the like of another embodiment, without logical inconsistency. Further, each of a plurality of functional units, means, steps and the like included in each embodiment may be combined or subdivided. Each of the above embodiments does not need to be practiced strictly following the description thereof but may be implemented by appropriately combining or partially omitting features.

The embodiments described above are not limited to being implemented as the electronic apparatus 1. For example, the embodiments described above may be implemented as a control method for an apparatus such as the electronic apparatus 1. Further, for example, the embodiments described above may be implemented as a control program for an apparatus such as the electronic apparatus 1.

Further, for example, in the embodiments described above, an example in which azimuth is measured based on transmission and reception of radio waves has been described. In one embodiment, however, the azimuth may be measured based on the transmission and reception of light waves or the transmission and reception of sound waves, as described above.

### REFERENCE SIGNS LIST

- 1: electronic apparatus
- 3: controller
- 5: direction detector
- 7: notification interface
- 9: status detector
- 10: sensor
- 12: storage
- 14: synthesizer
- 20: transmitter
- 21: clock generator
- 22: signal generator
- 23: quadrature modulator
- 24, 33, 34: mixer
- 25: transmission amplifier
- 26: transmission antennas
- 27: switch
- 28: phase device
- 30: receiver
- 31: reception antennas
- 32: reception amplifier
- 35: AD converter
- 36: FFT processer
- 50: object
- 100, 200: vehicle

## Claims

1. An electronic apparatus comprising:
a transmitter configured to transmit transmission waves;
a receiver configured to receive reflected waves from among the transmission waves reflected by an object; and
a controller configured to perform control to switch between a first mode in which radiation of the transmission waves is directed in a first direction and a second mode in which radiation of the transmission waves is directed in a second direction downward from the first direction,
wherein the controller performs control to switch to the second mode when a predetermined status is detected in the first mode.

2. The electronic apparatus according to claim 1, using
a transmission antenna that radiates the transmission waves in the first direction in the first mode, and
a transmission antenna that radiates the transmission waves in the second direction in the second mode.

3. The electronic apparatus according to claim 1,
wherein, in the first mode, a phase of a plurality of transmission antennas arranged in a vertical direction is controlled such that the transmission waves are radiated in the first direction, and
in the second mode, the phase of the plurality of transmission antennas is controlled such that the transmission waves are radiated in the second direction.

4. The electronic apparatus according to any one of claims 1 to 3,
wherein an electric power used to transmit the transmission waves in the second mode is less than an electric power used to transmit the transmission waves in the first mode.

5. The electronic apparatus according to any one of claims 1 to 4,
wherein the first direction is closer to horizontal than the second direction.

6. The electronic apparatus according to any one of claims 1 to 5,
wherein the electronic apparatus is installed in a mobile body; and
when a predetermined status in which a moving speed of the mobile body is equal to or less than a predetermined value is detected, the controller is configured to switch to the second mode.

7. The electronic apparatus according to any one of claims 1 to 5,
wherein the electronic apparatus is installed in a mobile body; and
when a predetermined status in which the mobile body is moving rearward is detected, the controller is configured to switch to the second mode.

8. The electronic apparatus according to any one of claims 1 to 5,
wherein the electronic apparatus is installed in a mobile body; and
when a predetermined status in which transition of the mobile body to a moving state from a stationary state is detected, the controller is configured to switch to the second mode.

9. The electronic apparatus according to any one of claims 1 to 5,
wherein the electronic apparatus is installed in a mobile body; and
when a predetermined status in which transition of the mobile body to a stationary state from a moving state is detected, the controller is configured to switch to the second mode.

10. The electronic apparatus according to any one of claims 1 to 5,
wherein the electronic apparatus is installed in a mobile body; and
when a predetermined status in which a braking state of the mobile body is detected, the controller is configured to switch to the second mode.

11. The electronic apparatus according to any one of claims 1 to 5,
wherein the electronic apparatus is installed in a mobile body; and
when a predetermined status in which creeping of the mobile body is detected, the controller is configured to switch to the second mode.

12. The electronic apparatus according to any one of claims 1 to 5,
wherein the electronic apparatus is installed in a mobile body; and
when a predetermined status in which the mobile body changes direction by a predetermined azimuth or more is detected, the controller is configured to switch to the second mode.

13. The electronic apparatus according to any one of claims 1 to 12,
wherein the electronic apparatus is configured to measure an azimuth with respect to an object, based on a signal transmitted as the transmission waves and a signal received as the reflected waves from among the transmission waves reflected by the object.

14. A control method for an electronic apparatus comprising:
a transmission step of transmitting transmission waves;
a reception step of receiving reflected waves from among the transmission waves reflected by an object; and
a control step of performing control to switch between a first mode in which radiation of the transmission waves is directed in a first direction and a second mode in which radiation of the transmission waves is directed in a second direction downward from the first direction,
wherein in the control step the electronic apparatus performs control to switch to the second mode when a predetermined status is detected in the first mode.

15. A control program for an electronic apparatus, the program causing a computer to perform:
a transmission step of transmitting transmission waves;
a reception step of receiving reflected waves from among the transmission waves reflected by an object; and
a control step of performing control to switch between a first mode in which radiation of the transmission waves is directed in a first direction and a second mode in which radiation of the transmission waves is directed in a second direction downward from the first direction,
wherein in the control step the electronic apparatus performs control to switch to the second mode when a predetermined status is detected in the first mode.
